Europäisches Patentamt

European Patent Office

Office européen des brevets

(19)

(11) Publication number: **0 075 997**
**A2**

## (12) EUROPEAN PATENT APPLICATION

(21) Application number: 82201174.8

(22) Date of filing: 21.09.82

(51) Int. Cl.³: **E 21 B 47/09**
**G 01 N 29/00**

(30) Priority: 25.09.81 US 305527
30.04.82 US 373333

(43) Date of publication of application:
06.04.83 Bulletin 83/14

(84) Designated Contracting States:
AT BE CH DE FR GB IT LI NL SE

(71) Applicant: Sigma Research, Inc.
2950 George Washington Way
Richland Washington 99362(US)

(72) Inventor: Neeley, Victor I.
8311 W. 10th
Kennewick Washington 99336(US)

(72) Inventor: Price, Ted O.
2641 Harris
Richland Washington 99352(US)

(72) Inventor: Hoch, Richmond J.
2921 S. Auburn Place
Kennewick Washington 99336(US)

(74) Representative: Hoijtink, Reinoud et al,
OCTROOIBUREAU ARNOLD & SIEDSMA No. 1,
Sweelinckplein
NL-2517 GK The Hague(NL)

(54) Well logging device.

(57) An ultrasonic apparatus and method for inspection of downhole pipe casings is disclosed. A plurality of transducers mounted on a movable probe are sequentially operated to transmit pulses at selected points along the surface of the downhole pipe to determine pipe deformation and/or wall thickness. An additional transducer is provided to determine transmissibility of the pulses and thereby correct for changes in the transmission properties of the medium through which the pulses travel as the probe advances along the pipe casing.

FIG 1

This invention relates to an ultrasonic apparatus for inspection of downhole pipe casings and a method for using same.

Corrosion in well casings is a well known problem that, along with gross distortions of the casing caused by changing geologic conditions, shortens the effective life or usefulness of the casing. Replacing the casing, inserting smaller diameter casing, adding a protective liner, or replacement of damaged sections are all very costly procedures. An inspection tool that could identify specific downhole problems and allow prediction of the effective remaining life of the well casing would be an invaluable device for this purpose.

No device, tool, or instrument presently exists which can perform an adequate inspection of well casings to satisfy current needs. While several electromagnetic devices have been tried they are inadequate due to excessive false indications resulting from rather minor changes in material properties of the casing. Numerous ultrasonic well logging devices have been developed; however, their purpose and use have been in uncased holes to gain additional data from geologic structures immediately surrounding the hole. Furthermore, the accuracy of ultrasonic well logging devices is susceptible to changes in the transmissibility of ultrasonic acoustic energy through a transmission medium within the well casing due to variations in temperature and variations in the composition of the transmission medium.

It is an object of this invention to provide a new device for detecting defects such as excessive corrosion and distortion in downhole well casings.

It is a further object of this invention to provide an ultrasonic well logging device capable of continuous measurement and correction of the velocity of acoustic energy through a transmission medium caused by variations in temperature and variations in the composition of the transmission medium.

Various other objects and advantages will become apparent upon reading the following description which, when taken with the accompanying drawings, describe a preferred form of the invention. It is to be noted, however, that the following description and drawings are given merely to set forth the preferred form of the invention and that alterations may be made within the scope of the appended claims. Therefore, only the claims are to be taken as specific definitions of what is claimed to be the invention.

This invention provides a well logging method and device for locating and defining deformations along a well casing.

The well logging device includes an acoustic probe. The probe is movable along a section of the well casing for transmitting a sequence of pulses of acoustic energy to the inner surface of the well casing at selected locations and for receiving corresponding echo pulses from the inner surface of the well casing. The device includes time-of-flight means for measuring the time interval between transmission of the pulse and reception of a corresponding echo pulse from the inner and outer surfaces of the well casing. The device has means for measuring variations in the transmissibility of acoustic energy through the transmission medium at various selected acoustic probe locations. Also included are means for calculating the distance between the acoustic probe and the inner surface of the well casing at each location and calculating the thickness of well casing at each location.

Locating defects involves repeatedly transmitting a sequence of pulses of acoustic energy radially outward from the movable acoustic probe. Most wells are filled with an aqueous solution that varies in composition and temperature in relation to depth. The aqueous solution forms an acoustic transmission or coupling medium between the probe and the well casing. The pulses are transmitted through the transmission medium within the downhole well from the probe to the inner and outer surfaces of the well casing at selected locations along the well casing. The time interval between the transmission of each pulse from the probe to the inner and outer surfaces of the well casing and the reception of each echo pulse at the acoustic probe of the pulse from the inner and outer surfaces is measured. The transmissibility of acoustic energy through the transmission medium at each selected location is measured for changes due to variations in temperature and variations in the composition of the transmission medium. The distance of the well casing from the acoustic probe and the casing wall thickness at each selected position, as a function of the measured time interval and the measured variation of transmissibility, is calculated to accurately determine whether the well casing is defective or deformed at each selected location and to obtain a profile of the well casing along the measured casing section.

A preferred embodiment of the invention is illustrated in the accompanying drawings in which:

Fig. 1 is an isometric view of the well logging device located in a well casing;

Fig. 2 is a sectional view of the acoustic probe;

Fig. 3 is a sectional view of the transmissibility correction means;

Fig. 4 is a simplified block diagram of the well logging device;

Fig. 5 is a block diagram of the well logging device electronics;

Fig. 6 is a simplified block diagram of the microprocessor.

The present invention provides a well logging device 10 for well casing inspection that is capable of accurate, rapid, and repeatable measurements of casing diameter, cross sectional variations and wall thickness along a section of a well casing 12. When a well casing is in good condition, casing inner diameter and the wall thickness are nearly constant and the casing is substantially cylindrical along its length. Variation in diameter and thickness from a nominal mean may be indicative of corrosion, bulging, an out-of-round condition, wear, or gross casing distortion caused by changing geologic conditions. Identification of specific downhole casing problems and prediction of effective remaining downhole casing life are possible when accurate casing diameter data are available.

The downhole casing contains a liquid medium, usually water. The composition of this medium is not constant over the length of the well casing. Variations in temperature, pressure, salinity, contamination, and composition are usually present in the liquid medium along the casing length. Such variations in the medium must be considered as the well casing diameter is determined if an accurate profile of the well casing is to be developed. The present invention provides compensation and correction for medium variations at each location of casing diameter measurement.

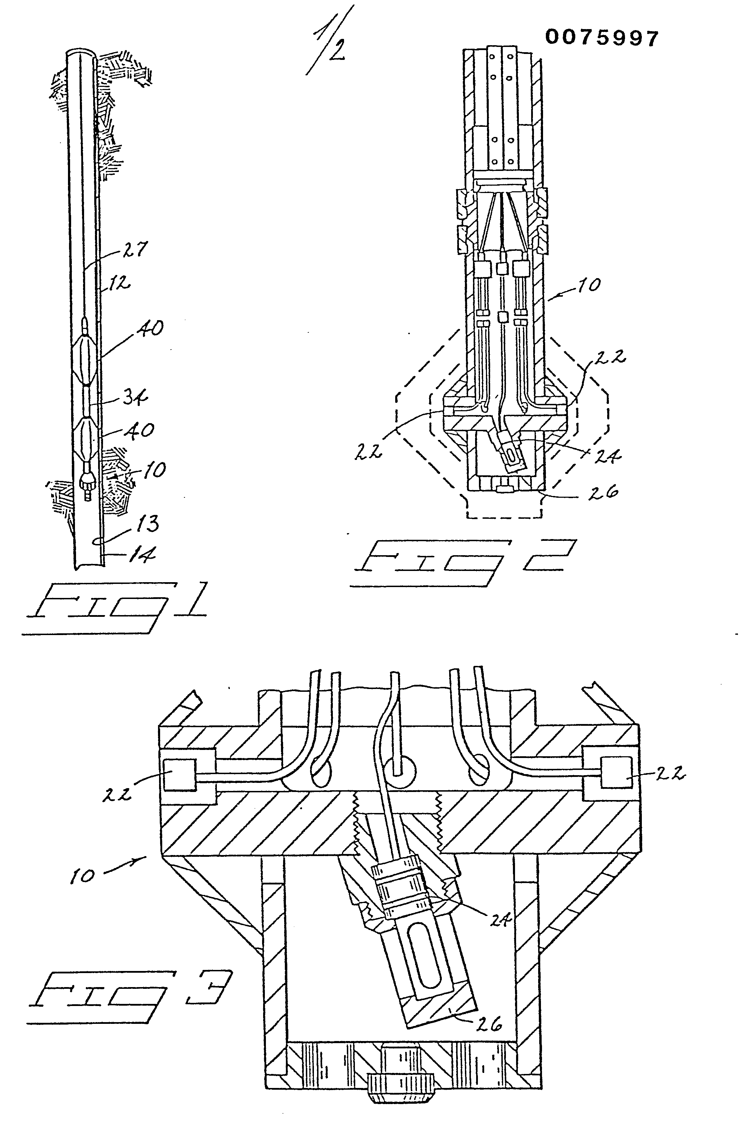

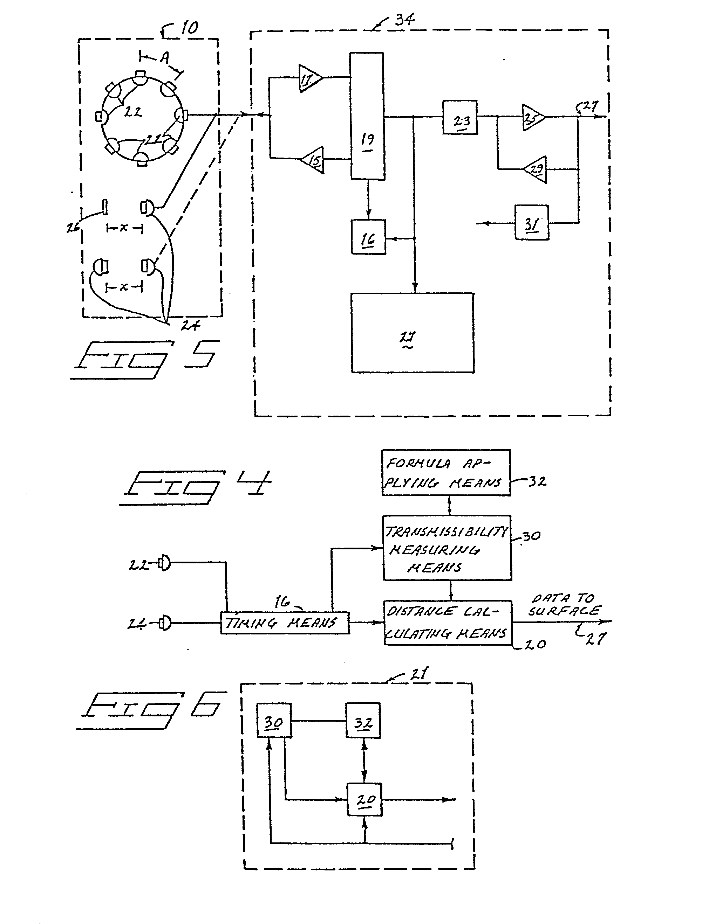

A typical application of the well casing system is illustrated in Fig. 1. An acoustic probe 10 is movable along a section of the well casing that is filled with a liquid (acoustic transmission medium) such as water having varying constituents and temperature along the section. The probe 10 has eight angularly spaced ultrasonic transducers 22 (Figs. 2-5) to provide eight inside diameter measurements at eight positions about the circumference of the casing. A reference ultrasonic transducer 24 provides feedback data to correct for variations in the transmissibility of acoustic energy through the transmission medium caused by variations in temperature and variations in the composition of the transmission medium.

The acoustic probe 10 is generally constructed for inspecting 13-5/8 inch, 16 inch, and 20 inch outer diameter (OD) well casings (shown as dotted lines in Fig. 2). The transducers 22 are mounted equiangularly (45 degrees apart as indicated by angle "A" in Fig. 5) about the probe 10 at a nominal distance of 2 inches from the well casing 12. The probe is centered within the casing 12 by centering means 40. Centering provides an accurate transmission path resulting in more reliable measurements.

The ultrasonic transducers 22 are lens focused to 3 inches in water. For a nominal water path of 2 inches, the lens effect of the cylindrically curved casing 12 causes the focus to occur at approximately mid-wall in the casing. The focal diameter is approximately 0.080 inches. The transducers 22 are 5-MHz, 0.5 inch diameter lead metaniobate devices.

The electronics necessary to operate the transducers 22 and to provide data to the uphole equipment in response to commands from the surface are contained in a pressure vessel 34 (Figs. 1 and 4) that trails the acoustic probe 10 in the downhole casing. Included in the pressure vessel 34 are: timing means 16, distance calculating means 20, transmissibility measuring means 30, formula applying means 32, and associated multiplexing, processing, and line devices (Fig. 4).

The measurement used by the present invention to locate and define deformations and defects of well casings 12 is the variation in the distance of the acoustic probe transducer 22 from an inner surface 13 and an outer surface 14 of the casing wall 12. To measure the distance of the acoustic probe transducer 22 from an inner surface 13 and an outer surface 14 of the casing wall 12, an ultrasonic pulse is transmitted by pulser 15 from a transducer 22 to the inner surface 13 and the outer surface 14 of the well casing 12. Reflections or echoes from the inner surface 13 and the outer surface 14 of the well casing 12 are detected by the same transducer 22 and amplified by amplifier 17 for processing. A second, receiving transducer could be used as an alternative to using the same transducer for both transmitting and receiving.

The intervals between the transmission of the pulse of acoustic energy from the transducers 22 and the return of an echo pulse from the inner surface 13 and the outer surface 14 of the casing 12 are measured by timing means 16. The timing process is repeated for each of the eight logging transducers 22 at each selected logging location.

The transmissibility of acoustic energy through water is generally sixteen microseconds per inch. Therefore, thirty-two microseconds per inch of water path is required for an echo return from the inner surface 13 of the well casing 12 because the pulse must first travel to the inner surface 13 and then return to the transducer 22. As stated earlier, the nominal water path is 2 inches as set by design of the acoustic probe 10 diameter. The transmissibility of acoustic energy through steel (casing material) is approximately four microseconds per inch. Therefore eight microseconds per inch of wall thickness is added to the time of flight for an echo pulse to return from the outer wall 14 to the transducer. The intervals between transmission of pulses and reception of echoes of the pulses from the inner surface 13 and the outer surface 14 of the well casing 12 are referred to as time-of-flight intervals.

The transducers 22 are multiplexed by multiplexer 19. The eight multiplexed ultrasonic transducers 22 are used to provide data every 45° of angular position around the well casing 12 circumference. The time-of-flight is substituted in the following equation to calculate the distance between the acoustic probe 10 and the reflecting casing surface (inner surface 13 or outer surface 14) of the well casing 12:

$$D = VT/2$$

where:

D = the distance between the probe 10 and the reflecting casing surface;

V = the transmissibility of the pulse through the transmission medium and on the casing as determined at the selected acoustic probe 10 location; and

T = the interval between transmission of each pulse and reception of the acoustic probe 10 of a corresponding echo of the pulse from the casing reflecting surface of the well casing 12.

The above equation requires a determination of the transmissibility of acoustic energy through the transmission medium at the selected acoustic probe 10 location. Such determination is necessary because variations in temperature and in the composition of the transmission medium (salinity, particulates, etc.) in which the probe 10 is immersed affect the transmissibility of the acoustic pulse. The transmissibility of acoustic energy through the casing remains relatively constant.

When the medium is water of unknown salinity (varying from zero to saturated solution) and contains other chemical substances, the transmissibility of acoustic energy is not constant along the well casing section. Temperature and pressure increase as the probe 10 is lowered into the well, further affecting the transmissibility of acoustic energy through the transmission medium.

To correct for variations in transmissibility of acoustic energy through the transmission medium, a reference ultrasonic transducer 24 is located on the acoustic probe 10 and placed exactly two inches ("X" in Fig. 5) from a reference reflector surface 26. The transducer 24 transmits a reference pulse of acoustic energy through the transmission medium toward the reference reflector 26. An echo pulse of the pulse of acoustic energy is received by the ultrasonic transducer 24. Data furnished by the reference transducer 24 is multiplexed with that of the other transducers 22 and is used to calculate the transmissibility of acoustic energy at any specific probe location. Alternately, separate transmitting and receiving transducers 24 may be used for transmitting and receiving transmissibility correction pulses (as shown by dotted lines in Fig. 5).

The equation used to calculate the actual value for transmissibility is as follows:

$$V = 2D/T$$

where:

D = the fixed distance between the ultrasonic transducer 24 and the reference reflecting surface 26 (in this embodiment 2 inches);

V = the transmissibility of the reference pulse through a sample of the transmission medium as determined at the selected location; and

T = The time interval between transmission of the reference pulse and reception of the echo of the reference pulse at the ultrasonic transducer 24.

During each measuring cycle, the eight distance measuring transducers 22 and the transmissibility correction transducer 24 are scanned. Data are processed by a microprocessor 21 as follows:

(a) a means for measuring variations in transmissibility (in this embodiment, timer 16) measures the time interval between transmission of a reference pulse from the reference transducer 24 and reception of an echo at the transducer 24 from the reference reflecting surface 26.

(b) a transmissibility calculating component 30 of the microprocessor 21 uses the time interval value and with a formula applying component 32

-1-

CLAIMS

1. A well logging method for locating and defining wall defects along a section of a well casing, comprising:

repeatedly transmitting a sequence of pulses of acoustic energy from a movable interior acoustic probe through a transmission medium to a wall surface of the well casing at selected locations along the section of the well casing:

measuring a time interval between transmission of each pulse to the surface and reception of each echo pulse at the acoustic probe of the pulse from the wall surface of the well casing;

measuring variations of transmissibility of the acoustic energy through the transmission medium at each selected acoustic probe location due to variations of temperature and composition of the transmission medium changes; and

calculating the distance of the wall surface from the acoustic probe at each selected position as a function of the measured time interval and the measured variation of transmissibility to accurately determine whether the well casing has a defect at each selected location.

2. A well logging method, as defined in claim 1, wherein the calculation step further comprises:

determining the distance of the wall surface from the acoustic probe for each pulse by application of the formula:

D = VT/2

where:

D = the distance between the wall surface and the probe;

V = the transmissibility of the pulse through the transmission medium as determined at the selected acoustic probe location; and

T = the interval between transmission of each pulse and reception at the acoustic probe of a corresponding echo of the pulse from the wall surface of the well casing.

3. A well logging method, as defined in claim 1, wherein the measuring of the variation of the transmissibility step comprises:

transmitting a reference pulse of acoustic energy from the movable acoustic probe through the transmission medium at a selected location;

receiving an echo of the reference pulse at the acoustic probe from a reference reflecting surface located a fixed distance from the acoustic probe;

measuring a time interval between transmission of the reference pulse and reception of the echo of the pulse;

calculating the transmissibility of the pulse through the transmission medium as a function of the fixed distance between the acoustic probe and the reflecting surface and the measured time interval between the transmission of the reference pulse and reception of the echo pulse from the reference reflecting surface.

4. A well logging device for locating and defining wall defects along a section of a well casing, comprising:

an acoustic probe movable along the section of the well casing for transmitting a sequence of pulses of acoustic energy through a transmission medium to a wall surface of the well casing at selected locations along the section of the well casing and for receiving corresponding echo pulses from the wall surface of the well casing;

means for measuring a time interval between transmission of each pulse and reception of a corresponding echo pulse from the wall surface of the well casing;

means for measuring variations in the transmissibility of acoustic energy through the transmission medium at various selected acoustic probe locations due to temperature changes
and variations in the composition of the transmission medium;

means for calculating a distance between the acoustic
probe and the wall surface of the well casing at each location
as a function of the measured time interval between transmission of each pulse and the reception of a corresponding
echo pulse from the wall surface of the well casing and the
measured variations of the transmissibility of the acoustic
energy through the transmission medium at each selected
location to accurately detect defects in the well casing.

5. A well logging device, as defined in claim 4, wherein the movable acoustic probe further comprises:

a plurality of ultrasonic transducers for transmitting
and receiving the pulses of acoustic energy;

the ultrasonic transducers being angularly located
about a center axis of the acoustic probe; and

means for sequentially operating the ultrasonic transducers.

6. A well logging device, as defined in claim 4, wherein the means for measuring variations of the transmissibility
comprises:

a first reference ultrasonic transducer for transmitting a reference pulse of acoustic energy through the
transmission medium at a selected location;

a second reference ultrasonic transducer for receiving
the reference pulse located at a fixed distance from the first
ultrasonic transducer such that a sample of the transmission
medium at a selected location is interposed between the first
and second ultrasonic transducers;

the ultrasonic transducers being located on the
movable acoustic probe;

means for measuring a time interval between transmission of the reference pulse and reception of the reference
pulse;

means for calculating the transmissibility of the
reference pulse through the transmission medium as a function
of the fixed distance between the two ultrasonic transducers
and the time interval between transmission of the reference
pulse and reception of the reference pulse to determine any variations in the transmissibility due to temperature changes and/or variations in the composition of the transmission medium.

7. A well logging device as defined in claim 6, wherein the means for measuring variations in transmissibility further comprises:

means for applying the formula:

V = 2D/T

to determine the transmissibility of the reference pulse through the transmission medium, where:

V = the transmissbility of the reference pulse through a sample of the transmission medium as determined at the selected location;

D = the fixed distance between the ultrasonic transducers;

T = the time interval between transmission of the reference pulse from the first ultrasonic transducer and reception of the reference pulse at the second ultrasonic transducer.

8. A well logging device, as defined in claim 4, wherein the means for measuring the variations in transmissibility comprises:

a reference ultrasonic transducer for transmitting a reference pulse of acoustic energy through the transmission medium at a selected location and for receiving an echo of the pulse;

the ultrasonic transducer being located on the movable acoustic probe;

a reflecting surface located a fixed distance from the ultrasonic transducer for reflecting the reference pulse;

the reflector surface being located on the movable acoustic probe such that a sample of the transmission medium at a selected location is interposed between the ultrasonic transducer and a reflecting surface;

means for measuring a time interval between transmission of the reference pulse and reception of the echo of the pulse;

means for calculating the transmissibility of the reference pulse through the transmission medium as a function of the fixed distance between the ultrasonic transducer and the reflecting surface and the time interval between transmission of the reference pulse and reception of the echo pulse from the reflecting surface to determine any variations in the transmissibility due to temperature changes and/or variations in the composition of the transmission medium.

9. A well logging device, as defined in claim 8, wherein the reference transmissibility calculating means further comprises:

means for applying the formula:

$$V = 2D/T$$

to determine the transmissibility of the reference pulse through the transmission medium, where:

V = the transmissibility of the reference pulse through a sample of the transmission medium as determined at the selected location;

D = the fixed distance between the ultrasonic transducer and the reflecting surface;

T = the time interval between transmission of the reference pulse and reception of the echo of the reference pulse at the ultrasonic transducer.

10. The well logging method as defined in claim 1 wherein the sequence of pulses of acoustic energy is repeatedly transmitted through the transmission medium to an inner wall surface of the well casing and wherein the distance from the acoustic probe to the inner surface is calculated at each selected position to determine whether the well casing is deformed at any of the selected locations and obtain a profile of the well casing along the section of the well casing.

11. The well logging method as defined in claim 1 wherein the sequence of pulses of acoustic energy is repeatedly transmitted through the transmission medium to an inner wall surface and to an outer wall surface and wherein the time intervals between transmission of pulses to and from the inner and outer wall surfaces are measured and wherein the thickness of the well casing is calculated at each selected position to determine whether the well casing is defective at any of the selected locations.

12. The well logging method as defined in claim 1 wherein the sequence of pulses of acoustic energy is repeatedly transmitted through the transmission medium to an inner wall surface and to an outer wall surface and wherein time intervals between transmission of pulses to and from the inner and outer surfaces are measured and wherein the distance from the acoustical probe to the inner surface and the thickness of the casing are measured at each selected position to determine whether the well casing is deformed and whether the casing wall is
defective at any of the selected locations and to obtain a
profile of the well casing along the section of the well
casing.

of the microprocessor 21 determines the transmissibility of acoustic energy through the transmission medium.

(c) the transmissibility value becomes the basis (along with that of data from the other transducers 22) for calculation of the distance from the acoustic probe 10 to the inner surface 13 and to the outer surface 14 of the well casing 12.

Once the real time value for transmissibility of acoustic energy is determined, the distance of the inner surface 13 and the outer surfaces of the well casing 12 from the acoustic probe 10 are determined.

In operation, pulses are transmitted from each ultrasonic transducer 22 to the inner surface 13 and to the outer surface 14 of the well casing 12. Reflections of the pulses from the inner surface 13 and the outer surface 14 are received at the transducer 22. The time-of-flight of the pulses (the time interval between transmission of the pulses and reception of the echo pulses of the pulse) is determined by timing means 16. The time value thus determined and the transmissibility value for that particular probe 10 location are used by a distance calculating component 20 of microprocessor 21 to determine the distances of the probe 10 from the inner surface 13 and outer surface 14 of the well casing 12. The distance and wall thickness information is then digitized by the digital to analog converter 23, amplified by line driver 25, and sent to the surface over the wire line 27 for display and recordation (Fig. 5).

Control information from the surface is received over the wire line 27 and amplified by receiver 29 before being routed to the microprocessor 21. Operating power is supplied over the wire line 27 and converted for use by the downhole electronics by the DC/DC converter 31.

Transducer 22 pulsing rates are controlled from uphole and can be selected to inspect in increments as small as 0.006 inches (from 0.006 inches to 0.036 inches) or at a preset rate up to approximately forty inspections per second for the full set of transducers. At the maximum inspection speed of 10 feet per minute, the arrangement provides inspection at approximately every 0.050 inches of the well casing 12. All eight well casing radius values and eight wall thickness values, for each inspection or scan cycle, are recorded uphole on magnetic disks for later playback if desired. Uphole, the eight well casing radius values are converted to four diameter values that are displayed on an updating TV display. The operator can choose the number of feet displayed on the TV screen, which is divided into approximately 200 pixels. Under normal operation, several feet of the last inspection may be displayed.

Surface equipment (not shown) includes control and display consoles, cable metering equipment, and interconnecting cables. The control and display consoles at the surface have data storage and display capabilities. Surface equipment can also include a video display to "roll through" to show data, a dual pen script chart recorder to display minimum casing diameter and nominal wall thickness and various data recording devices, such as a disk drive.

The data collected are shown as a deviation from a nominal well casing diameter value and as a deviation from a nominal casing wall thickness. An advantage of the present system is that data can be recorded on a magnetic disk for replay at any later time. Transmission from a well casing probe 10 to the surface through a wire line 27 is digital to minimize ground loop effects. Control data functions and transmission rates for surface and downhole equipment are microprocessor controlled. Header information, such as time, date, well number, and any other pertinent information, is recorded on the magnetic disk through a keyboard entry on the surface consoles.

The movable acoustic probe 10 is connected to surface equipment (not shown) via a wire line logging winch (not shown) and armored cable (not shown). A cable meter (not shown) is placed at the well head to measure the probe depth and logging speed. The cable meter is included to synchronize a surface display to the acoustic probe 10 positions.

As noted above, this description was given merely by way of example. Only the following claims are to be taken as definitions of this invention.

**FIG 1**

**FIG 2**

**FIG 3**

1/2

0075997

FIG 5

FIG 4

FORMULA AP-
PLYING MEANS — 32

TRANSMISSIBILITY
MEASURING
MEANS — 30

22 —◐

16

24 —◐    TIMING MEANS

DISTANCE CAL-
CULATING MEANS

DATA TO
SURFACE

20    27

FIG 6

21

30    32

20